# EUROPÄISCHE PATENTSCHRIFT

(11) **EP 3 523 846 B1**
(45) Veröffentlichungstag und Bekanntmachung des Hinweises auf die Patenterteilung: **17.01.2024**
(21) Anmeldenummer: 17783439.7
(22) Anmeldetag: 05.10.2017
(51) Int. Cl.: H01M 50/522, H01M 50/529, H01M 4/66, H01M 4/76, H01M 4/80, B22D 25/04, B22D 18/04, B22D 19/14, H01B 1/02

(54) **STROMLEITENDE STRUKTUR UND VERFAHREN ZUM HERSTELLEN HIERVON**
ELECTRICALLY CONDUCTIVE STRUCTURE AND METHOD FOR THE PRODUCTION THEREOF
STRUCTURE ÉLECTROCONDUCTRICE ET PROCÉDÉ POUR SA FABRICATION

(30) Priorität: 05.10.2016 DE 102016118863
(43) Veröffentlichungstag der Anmeldung: 14.08.2019
(73) Patentinhaber: Clarios Germany GmbH & Co. KG, 30419 Hannover (DE)
(72) Erfinder: BAUER, Jürgen, 31141 Hildesheim (DE); MEISSNER, Eberhard, 31515 Wunstorf (DE); KOCH, Ingo, 31789 Hameln (DE); VYSHNEPOLSKIY, Boris, 30823 Garbsen (DE)
(74) Vertreter: Meissner Bolte Partnerschaft mbB
(86) Internationale Anmeldenummer: PCT/EP2017/075302
(87) Internationale Veröffentlichungsnummer: WO 2018/065507

(56) Entgegenhaltungen:
- WO-A2-2015/027257
- DE-T2- 69 620 699
- JP-A- 2002 208 405
- JP-A- 2002 371 327
- KR-A- 20160 027 365
- US-A1- 2015 184 269
- IBRAHIM KHAIRUL AMILIN ET AL: "Electrical conductivity and porosity in stainless steel 316L scaffolds for electrochemical devices fabricated using selective laser sintering", MATERIALS & DESIGN, ELSEVIER, AMSTERDAM, NL, Bd. 106, 26. Mai 2016 (2016-05-26), Seiten 51-59, XP029645454, ISSN: 0264-1275, DOI: 10.1016/J.MATDES.2016.05.096

## Beschreibung

Die vorliegende Erfindung betrifft eine stromleitende Struktur, insbesondere zum Einsatz in einem Energiespeichersystem eines Fahrzeugs. Des Weiteren betrifft die vorliegende Erfindung ein Verfahren zum Herstellen einer solchen Struktur.

Stromleitende Elemente, insbesondere Elemente, an denen über kurze oder lange Zeiträume hohe Ströme geleitet werden, werden herkömmlicherweise bereichsweise massiv, d.h. mit einer lokal hohen Materialdichte, ausgebildet, um zum einen eine sichere und zuverlässige Funktionsweise und zum anderen eine ausreichende mechanische Stabilität zu gewährleisten.

Dies weist allerdings den Nachteil auf, dass das Gewicht dieser Elemente oder das Gewicht von Systemen, welche derartige Elemente beinhalten, vergleichsweise hoch ist.

Eine Möglichkeit, das Gewicht von derartigen Elementen zu verringern, ist es, diese Elemente weniger massiv auszubilden, d.h. den Querschnitt der Elemente zu reduzieren, um Material zu sparen. DE 696 20 699 T2 offenbart eine stromleitende Struktur aus dem Stand der Technik.

Bei einer einfachen Querschnittsverminderung des Elements zur Gewichtsreduzierung erhöht sich allerdings der elektrische Widerstand proportional, was beispielsweise mit einer Verminderung der elektrischen Eigenschaften, insbesondere der elektrischen Leitfähigkeit, einhergeht. Darüber hinaus verschlechtern sich die mechanischen Eigenschaften des Elements, insbesondere die Biegefestigkeit und die Bruchfestigkeit, sogar überproportional.

Aufgabe dieser Erfindung ist es daher, eine verbesserte stromleitende Struktur anzugeben, welche die Nachteile des Standes der Technik nicht aufweist und zudem einfach und kostengünstig hergestellt werden kann.

Im Hinblick auf die stromleitende Struktur wird die der Erfindung zugrunde liegende Aufgabe erfindungsgemäß durch den Gegenstand des unabhängigen Patentanspruchs 1 gelöst. Im Hinblick auf das Verfahren zum Herstellen einer solchen Struktur wird die der Erfindung zugrunde liegende Aufgabe durch den Gegenstand des nebengeordneten Patentanspruchs 12 gelöst. Vorteilhafte Weiterbildungen sind in den abhängigen Patentansprüchen angegeben.

Demnach wird erfindungsgemäß eine stromleitende Struktur gemäß Anspruch 1 angegeben.

Die Vorteile der Erfindung liegen auf der Hand. Durch die erfindungsgemäße Struktur wird das Gewicht verringert, und zwar ohne die elektrischen und/oder mechanischen Eigenschaften zu verschlechtern.

Der Erfindung liegt ferner die Erkenntnis zugrunde, zur Reduzierung des Gewichts poröses Material zu verwenden, wobei ebenfalls erkannt wurde, dass das Verwenden von offenporigem Material folgende Nachteile aufweist. Das Ausbilden von offenen Poren führt zum einen zu verschlechterten elektrischen Eigenschaften, zum anderen zu verschlechterten mechanischen Eigenschaften. Um die elektrischen Eigenschaften solcher Elemente zu verbessern, werden die offenen Poren eines solchen Elements dem Elektrolyten zugänglich gemacht und bevorzugt mit aktiver Masse gefüllt. Daraus ergibt sich jedoch ein weiterer Nachteil; nämlich, dass mehr Oberfläche einem Korrosionsprozess ausgesetzt ist.

Im Gegensatz dazu ist durch die Ausbildung von überwiegend geschlossenen Poren nur die äußere Oberfläche der stromleitenden Struktur dem Korrosionsprozess ausgesetzt, insbesondere wird keine zusätzliche Oberfläche dem Korrosionsprozess ausgesetzt, d.h. die Korrosionseigenschaften der Struktur bleiben im Vergleich zu einer massiv ausgeführten Struktur gleicher Größe und Form unverändert. Gleichzeitig können Gewicht und Materialkosten eingespart werden, da durch die poröse Ausführung der Struktur weniger Material verwendet werden muss.

Gemäß einem weiteren Aspekt der Erfindung können die Poren zumindest teilweise einen im Wesentlichen runden Querschnitt aufweisen.

Dies liefert den Vorteil, dass keine vorherige Ausrichtung bzw. Orientierung solcher Poren nötig ist, und daher die Fertigung einer solchen Struktur erleichtert wird. Dies führt wiederum zu einer Senkung der Fertigungskosten.

Gemäß der Erfindung weisen die Poren zumindest teilweise einen im Wesentlichen nicht-runden Querschnitt auf, insbesondere einen im Wesentlichen ovalen Querschnitt.

Dadurch kann einen Vorzugsrichtung ausgebildet werden. Eine solche Vorzugsrichtung beeinflusst Eigenschaften wie beispielsweise die elektrische und/oder thermische Leitfähigkeit, insbesondere werden diese Eigenschaften verbessert.

Gemäß der Erfindung weist die Struktur zumindest in dem Bereich der Poren eine Dicke von mindestens 5 mm, besonders bevorzugt mindestens etwa 10 mm.

Dadurch kann die Struktur vorteilhafterweise an Stellen, an denen es zur Stromleitung und zur Sicherstellung der mechanischen Festigkeit erforderlich ist, massiv ausgeführt werden, wobei dadurch das Gewicht der Struktur nicht übermäßig gesteigert wird oder das Gewicht sogar gesenkt werden kann.

Gemäß der Erfindung sind die Poren inhomogen in der Struktur verteilt, insbesondere in Stromleitungsrichtung. Eine inhomogene Verteilung der Poren heißt in diesem Zusammenhang, dass die Poren nicht gleichmäßig verteilt in der Struktur angeordnet sind, sondern dass sie in einem im Inneren der Struktur liegenden Bereich, der überwiegend entlang der Stromleitungsrichtung verläuft, angeordnet sind. Dadurch verbessern sich die elektrischen und/oder mechanischen Eigenschaften, insbesondere die elektrische Leitfähigkeit.

Gemäß der Erfindung weisen die Poren zumindest teilweise eine anisotrope Orientierung auf, und zwar derart, dass mindestens ein Teil der Poren einen nicht-runden Querschnitt, insbesondere einen ovalen Querschnitt, aufweist, dessen Längsachse in Stromleitungsrichtung orientiert ist.

Dies birgt den Vorteil, dass die elektrischen und/oder mechanischen Eigenschaften weiterhin erhöht werden, und zwar durch die Ausrichtung der Poren in Stromleitungsrichtung.

Gemäß einem weiteren Aspekt der Erfindung kann zumindest ein Teil der Poren mit Vakuum, einem Gas und/oder einem Polymer gefüllt sein.

Dadurch wird vorteilhafterweise das Gewicht der Struktur weiterhin verringert. Gemäß einem weiteren Aspekt der Erfindung kann zumindest ein Teil der Poren mit einem elektrisch leitenden Material gefüllt sein.

Dies führt vorteilhafterweise zu einer Verbesserung der elektrischen Leitfähigkeit und kann darüber hinaus das Gewicht der Struktur zusätzlich verringern, insbesondere dann, wenn das Füllmaterial leichter ist, bzw. eine geringere Dichte aufweist, als das den Bereich bildendende Metall bzw. die den Bereich bildendende metallähnliche Substanz.

Gemäß einem weiteren Aspekt der Erfindung kann das elektrisch leitende Material Metall, vorzugsweise Silber, Kupfer, Gold, Wolfram und/oder Aluminium, und/oder Kohlenstoff oder eine Kohlenstoff-enthaltende Substanz, Kohlenstofffasern oder eine Kohlenstofffasern-enthaltende Substanz, aufweisen.

Gemäß der Erfindung weist die Struktur eine erste Gruppe von Poren mit einer Größe von etwa 10 µm bis etwa 500 µm auf, bevorzugt mit einer Größe von etwa 50 µm bis etwa 300 µm, besonders bevorzugt mit einer Größe von etwa 100 µm bis etwa 200 µm.

Eine derartige Struktur erhöht - bzw. beeinträchtigt zumindest nicht - die mechanische Stabilität der Struktur. So kann ein optimaler Kompromiss zwischen den elektrischen und den mechanischen Eigenschaften gefunden werden.

Gemäß einem weiteren Aspekt der Erfindung kann die Struktur eine weitere Gruppe von Poren mit einer Größe von mindestens 1 mm aufweisen.

Dies liefert den Vorteil, dass zum einen eine derartige Struktur einfacher zu fertigen ist, und ferner die Poren besser anzuordnen sind, insbesondere zu orientieren sind. Darüber hinaus kann die elektrische und/oder thermische Leitfähigkeit steigen.

Gemäß der Erfindung weist die Struktur zumindest bereichsweise eine Porendichte von mindestens etwa 5 Poren/cm² auf, bevorzugt mindestens etwa 10 Poren/cm², besonders bevorzugt mindestens etwa 20 Poren/cm².

Dabei geht eine höhere Porendichte mit einem niedrigeren Gewicht einher, insbesondere dann, wenn die Poren ungefüllt und/oder mit einem leichten Material gefüllt sind. Auch die elektrische und/oder thermische Leitfähigkeit kann über die Porendichte positiv beeinflusst werden.

Unter einem leichten Material wird in diesem Zusammenhang insbesondere ein leichtes Polymer, wie zum Beispiel Polyester, Polyamide, und/oder Polyolefine wie Polyethylen, Polypropylen und/oder Polybutylen.

Gemäß einem weiteren Aspekt der Erfindung kann die Struktur zumindest bereichsweise in dem Bereich der Poren aus Blei und/oder einer Bleilegierung gefertigt sein.

Dies erhöht vor allem beim Einsatz einer solchen Struktur in einem Bleiakkumulator die Korrosionsbeständigkeit der Struktur und die Funktionalität des Bleiakkumulators.

Gemäß der Erfindung ist die Struktur zumindest bereichsweise als Stromschiene oder Brückenverbinder eines Fahrzeugs, bevorzugt einer Starterbatterie eines Fahrzeugs, ausgebildet.

Hiermit wird klargestellt, dass die Struktur als Bauteil verwendet wird, an dem hohe Ströme anfallen. Dabei wird trotz einer massiven Ausführung der Struktur gleichzeitig das Gewicht reduziert und die mechanischen und/oder elektrischen Eigenschaften verbessert, bzw. zumindest nicht verschlechtert.

Gemäß einem weiteren Aspekt der Erfindung wird ein System bereitgestellt, welches Folgendes aufweist: mindestens einen Akkumulator, insbesondere einen Bleiakkumulator, mindestens ein elektrisches Abnehmerelement, welches mit mindestens einem Pol des Akkumulators elektrisch verbunden ist, und mindestens eine oben beschriebene Struktur. Hierbei ist die Struktur Teil des Akkumulators und/oder des elektrischen Abnehmerelements.

Hier ist ein Ausführungsbeispiel beschrieben, welches vorteilhafterweise ein System mit reduziertem Gewicht beschreibt, das zudem über verbesserte elektrische Eigenschaften und/oder zumindest nicht verschlechterte mechanische Eigenschaften verfügt.

Bezüglich des Verfahrens zum Herstellen von einer stromleitenden Struktur, insbesondere einer oben beschriebenen stromleitenden Struktur, wird zunächst eine Polymer-Struktur bereitgestellt. Anschließend wird diese Polymer-Struktur in eine Gießform eingebracht und die Gießform mit Schmelze aus Metall oder einer metallähnlichen Substanz ausgefüllt. Dabei vergast die Polymer-Struktur derart, dass geschlossen ausgeführte Poren in der gegossenen Struktur gebildet werden.

Hierbei wird ein einfaches Herstellungsverfahren angegeben, wodurch die Produktionskosten gering gehalten werden können.

Gemäß einem weiteren Aspekt der Erfindung kann die Polymer-Struktur eine Vielzahl von Partikeln aus elektrisch leitfähigem Material aufweisen, insbesondere Metall, vorzugsweise Silber, Kupfer, Gold, Wolfram und/oder Aluminium, und/oder Kohlenstoff oder eine Kohlenstoff-enthaltende Substanz, vorzugsweise Kohlenstofffasern oder eine Kohlenstofffasern-enthaltende Substanz. Dabei ist die Polymer-Struktur mit den Partikeln dazu ausgelegt ist, in der gegossenen Struktur Poren auszubilden, die mit dem elektrisch leitfähigen Material gefüllt sind.

Dies erzielt den Vorteil, dass die gegossene Struktur eine hohe Leitfähigkeit aufweist, wobei die einfache Herstellungsweise erhalten bleibt. Zudem kann auch das Gewicht reduziert werden, insbesondere wenn die leitfähigen Partikel ein geringeres spezifisches Gewicht aufweisen als die umgebende Schmelze aus Metall oder einer metallähnlichen Substanz, bzw. das Metall oder die metallähnliche Substanz der gegossenen Struktur.

Gemäß einem weiteren Aspekt der Erfindung kann die Polymer-Struktur aus einem Polymerschaum gebildet sein.

Dies führt vorteilhafterweise zu einer weiteren Reduzierung der Materialkosten, da weniger Material für die Polymer-Struktur benötigt wird.

Gemäß einem weiteren Aspekt der Erfindung kann es sich bei dem Verfahren um ein Niederdruck-Vollformgießverfahren handeln.

Hierbei handelt es sich vorteilhafterweise um ein kostengünstiges und präzises Verfahren.

Die Erfindung wird nachstehend, auch hinsichtlich weiterer Merkmale und Vorteile, anhand der Beschreibung von Ausführungsformen unter Bezugnahme auf die beiliegenden Zeichnungen näher erläutert.

Diese zeigen in:
- FIG. 1: eine schematische Darstellung einer stromleitenden Struktur, in welcher die Poren isotrop, bzw. homogen verteilt und isotrop orientiert ist;
- FIG. 2: eine schematische Darstellung einer stromleitenden Struktur, in welcher die Poren anisotrop, bzw. inhomogen verteilt sind; und
- FIG. 3: eine schematische Darstellung einer stromleitenden Struktur, in welcher die Poren inhomogen verteilt und anisotrop orientiert sind.

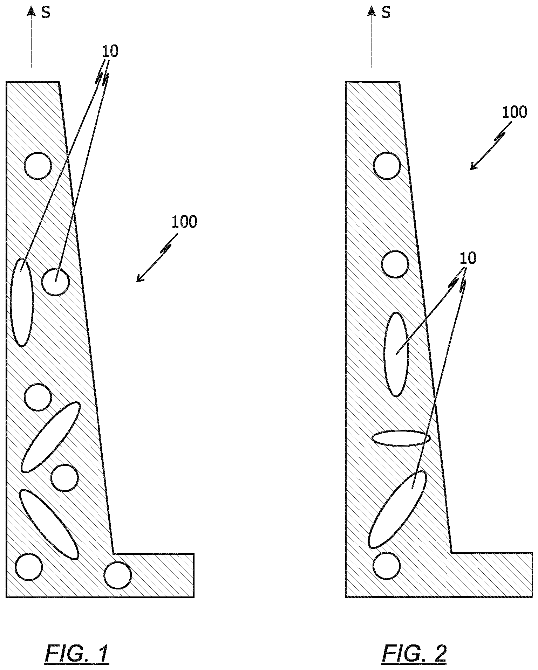

Nachfolgend werden die erfindungsgemäße stromleitende Struktur und das Verfahren zum Herstellen einer solchen Struktur unter Bezugnahme auf die Darstellungen in den FIGS. 1 bis 3 beschrieben. Gleiche oder gleichwirkende Elemente und Funktionen sind mit denselben oder ähnlichen Bezugszeichen versehen.

Zunächst werden im Folgenden allgemeine Merkmale einer erfindungsgemäßen stromleitenden Struktur näher beschrieben, welche allein oder in Kombination auf jedwede stromleitende Struktur gemäß der Erfindung angewendet werden können, insbesondere sind die folgenden Merkmale nicht auf eine Ausführungsform beschränkt.

Die Versorgung eines Fahrzeugs mit Energie, insbesondere mit Strom, spielt mit der stetig steigenden Zahl an Energieverbrauchern, insbesondere Stromverbrauchern, eine immer wichtigere Rolle, und zwar sowohl in Verbrennungsmotor-basierten Fahrzeugen, als auch in Elektrofahrzeugen und in Hybridfahrzeugen. Insbesondere fallen hohe Ströme in Starterbatterien von Fahrzeugen an.

Das Fahrzeug kann hierbei ein Luft- oder Wasserfahrzeug, ein spurgeführtes Fahrzeug, ein Geländefahrzeug oder bevorzugt ein Straßenfahrzeug sein, wobei unter Straßenfahrzeug ein Personenkraftwagen, ein Lastkraftwagen, ein Bus, oder ein Wohnmobil verstanden werden kann.

Des Weiteren kann unter Hybridfahrzeug jedes Fahrzeug verstanden werden, welches sowohl einen Verbrennungsmotor, als auch einen Elektromotor als Energiequelle aufweist. Hybridfahrzeuge können dabei in Mikrohybrid-, Mildhybrid-, Vollhybrid- und Plug-In-Hybridfahrzeugen untergliedert werden.

Elemente, welche dazu ausgelegt sind, hohe Ströme aufzunehmen, weiterzuleiten und/oder abzugeben, weisen zumindest bereichsweise eine erfindungsgemäße stromleitende Struktur auf, die zum einen gute elektrische und/oder mechanische Eigenschaften aufweist, und gleichzeitig ein möglichst geringes Gewicht.

Eine stromleitende Struktur gemäß der Erfindung ist zumindest bereichsweise aus einem Metall oder einer metallähnlichen Substanz gebildet, in welchem bzw. in welcher eine Vielzahl von geschlossen ausgeführten Poren ausgebildet ist.

Das Vorsehen von Poren reduziert das Gesamtgewicht der stromleitenden Struktur, und zwar ohne die elektrischen und/oder mechanischen Eigenschaften zu verschlechtern, wobei insbesondere die elektrischen Eigenschaften, vorzugsweise die elektrische Leitfähigkeit, verbessert werden. Des Weiteren verbessert das Merkmal, dass die Poren überwiegend geschlossen ausgeführt sind, die Korrosionsbeständigkeit der stromleitenden Struktur, und zwar deshalb, weil die Fläche, welche dem Elektrolyten ausgesetzt ist, nicht vergrößert wird, sondern gleichbleibt. Dadurch bleiben die Korrosionseigenschaften der stromleitenden Struktur unverändert, insbesondere im Vergleich zu einer massiv ausgeführten Struktur gleicher äußeren Form und Größe.

Daher weist die erfindungsgemäße stromleitende Struktur eine Oberfläche aus zumindest im Wesentlichen unverändertem Werkstoff auf, insbesondere wenn die Oberfläche einem Korrosionsprozess ausgesetzt ist.

In einem Querschnitt der stromleitenden Struktur entlang der Stromleitungsrichtung können die Poren einen zumindest im Wesentlichen runden Querschnitt und/oder einen zumindest im Wesentlichen nicht-runden Querschnitt, insbesondere einen ovalen Querschnitt, aufweisen.

In diesem Zusammenhang wird unter einer Pore mit einem zumindest im Wesentlichen nicht-runden Querschnitt eine Pore verstanden, welche einen Querschnitt mit einer Längsachse oder Vorzugsachse aufweist, anhand derer die Pore in eine Richtung, insbesondere in Stromleitungsrichtung, orientiert werden kann.

Die Größe von Poren mit einem zumindest im Wesentlichen nicht-runden Querschnitt wird in diesem Zusammenhang bevorzugt in Bezug auf die Größe der Poren entlang ihrer Längsachse oder Vorzugsachse angegeben.

Eine im Querschnitt zumindest im Wesentlichen runde Pore geht bevorzugt mit einer kugelförmigen Pore in der stromleitenden Struktur einher. Des Weiteren kann die stromleitende Struktur stäbchenförmige, plättchenförmige, faserförmige, ovoidförmige, und/oder ellipsoidförmige Poren aufweisen.

Kugelförmige Poren weisen den Vorteil auf, dass diese bei der Herstellung der stromleitenden Struktur nicht vorher ausgerichtet werden müssen. Stäbchenförmige, plättchenförmige, faserförmige, ovoidförmige, und/oder ellipsoidförmige Poren sind vorzugsweise derart ausgerichtet, dass deren Längsachse oder Vorzugsachse zumindest im Wesentlichen in Stromleitungsrichtung zeigt. Dadurch können die elektrischen Eigenschaften, insbesondere die elektrische Leitfähigkeit, vorteilhafterweise verbessert werden, während gleichzeitig die mechanischen Eigenschaften zumindest nicht verschlechtert werden.

Die Poren sind inhomogen in der stromleitenden Struktur verteilt angeordnet.

Eine inhomogene Verteilung der Poren heißt in diesem Zusammenhang, dass die Poren ungleichmäßig verteilt sind, insbesondere dass die Poren in einem inneren, zentral gelegenen Bereich der stromleitenden Struktur angeordnet sind, bevorzugt entlang der Stromleitungsrichtung.

Die Poren sind ferner anisotrop orientiert sein, d.h. in eine Richtung ausgerichtet; und zwar sind Poren, welche einen zumindest im Wesentlichen nicht-runden Querschnitt aufweisen, und damit bevorzugt eine Längsrichtung oder Vorzugsrichtung, insbesondere einen ovalen Querschnitt, derart ausgerichtet, dass deren Längsachse in Stromleitungsrichtung orientiert ist.

Zumindest ein Teil der geschlossen ausgeführten Poren der stromleitenden Struktur kann mit Folgendem gefüllt sein: Vakuum, reinem Gas und/oder einem leichten Material. Dies führt vorteilhafterweise zu einer Gewichtsreduktion der stromleitenden Struktur, und zwar ohne die elektrischen und/oder mechanischen Eigenschaften zu beeinträchtigen.

Das leichte Material kann hierbei insbesondere ein leichtes Polymer sein, wie zum Beispiel Polyester, Polyamide, und/oder Polyolefine. Zu der Gruppe der Polyolefine zählen beispielsweise Polyethylene, Polypropylene und/oder Polybutylene oder Copolymerisate hiervon.

Zumindest ein Teil der geschlossen ausgeführten Poren der stromleitenden Struktur kann mit einem elektrisch leitenden Material, insbesondere mit Metall gefüllt sein. Vorzugsweise können die Poren mit Silber, Kupfer, Gold, Wolfram und/oder Aluminium gefüllt sein. Es ist auch denkbar, Kohlenstoff oder eine Kohlenstoff-enthaltende Substanz als Füllungsmaterial zu verwenden, insbesondere in Form von Kohlenstofffasern oder von einer Kohlenstofffasern-enthaltenden Substanz.

Dies verbessert zumindest die elektrischen Eigenschaften, insbesondere die elektrische Leitfähigkeit, und kann zusätzlich das Gewicht der stromleitenden Struktur reduzieren, wenn das elektrisch leitende Material leichter ist, d. h. eine geringere Dichte aufweist, als das den Bereich ausbildende Metall oder die den Bereich ausbildende metallähnliche Substanz.

Das Vorsehen von geschlossen ausgeführten Poren führt zu einer sogenannten spezifischen Scheindichte, die - im Vergleich zu einer massiv aufgeführten Struktur, d.h. bei einer nicht porösen Struktur, gleicher äußeren Form und Größe - geringer ist als die spezifische Dichte der massiv ausgeführten Struktur. Gleichzeitig sind die Korrosionseigenschaften unverändert, und die elektrischen und/oder mechanischen Eigenschaften verbessert oder zumindest im Wesentlichen nicht verschlechtert.

Eine stromleitende Struktur kann ein zumindest im Wesentlichen massives Element sein, d.h. zumindest bereichsweise eine hohe Materialdichte aufweisen. So weist die stromleitende Struktur zumindest in dem Bereich der Poren eine Dicke von mindestens 5 mm, besonders bevorzugt mindestens etwa 10 mm auf. Durch die poröse Ausführungsform der stromleitenden Struktur wird trotz der massiven Ausführungsform das Gewicht nicht übermäßig groß. Insbesondere wird die Größe, bevorzugt die Dicke, der stromleitenden Struktur dadurch bestimmt, dass die mechanischen Eigenschaften, wie z. B. die Biegefestigkeit und/oder die Bruchfestigkeit, auch bei hohen Stromflüssen erhalten bleiben müssen.

Im Falle eines Bleiakkumulators können die dem Elektrolyten ausgesetzten Oberflächen, insbesondere der Bereich um die Poren, aus Blei und/oder einer Bleilegierung gefertigt sein. Dies steigert die Funktionsfähigkeit und die elektrischen Eigenschaften des Bleiakkumulators. Die stromleitenden Strukturen in dem Bleiackumulator tragen erheblich zum Gesamtgewicht bei, da Blei einerseits eine hohe spezifische Dichte und andererseits eine relative geringe spezifische Leitfähigkeit besitzt. Durch das poröse Ausbilden der stromleitenden Struktur wird die spezifische Scheindichte der porösen Bleistruktur vermindert. Dadurch ergibt sich eine stromleitende Struktur mit geringerem Gewicht bei gleicher äußeren Form und unveränderten Korrosionseigenschaften.

Des Weiteren kann die stromleitende Struktur, insbesondere in dem Bereich der Poren, Nickel und/oder eine Nickellegierung, Silber und/oder eine Silberlegierung, Lithium und/oder eine Lithiumlegierung, Aluminium und/oder eine Aluminiumlegierung, Kupfer und/oder eine Kupferlegierung, oder Natrium und/oder eine Natriumlegierung aufweisen.

Eine stromleitende Struktur ist ferner zumindest bereichsweise als Stromschiene oder Brückenverbinder ausgebildet.

Ferner kann die stromleitende Struktur im Falle eines Bleiakkumulators ebenso zumindest bereichsweise das sogenannte Kopfblei ausbilden, wobei unter Kopfblei die Brücken und Verbinder einer Elektrodenplatte und/oder eines Batteriemoduls verstanden werden.

Die erfindungsgemäße stromleitende Struktur kann überall dort eingesetzt werden, oder vorgesehen sein, wo hohe Ströme übertragen oder abgenommen werden. Insbesondere kann die stromleitende Struktur auch in Generatorsystemen zum Einsatz kommen und/oder in Energiespeichersystemen, insbesondere Akkumulatoren von Fahrzeugen, bevorzugt einer Starterbatterie eines Fahrzeugs.

Die erfindungsgemäße stromleitende Struktur weist zumindest bereichsweise eine Porendichte von mindestens 5 Poren/cm² auf, bevorzugt mindestens 10 Poren/cm², besonders bevorzugt mindestens 20 Poren/cm².

Dabei ist es genauso gut denkbar, die Porendichte in einer Volumeneinheit anzugeben. Dabei kann die erfindungsgemäße stromleitende Struktur zumindest bereichsweise eine Porendichte von mindestens 5 Poren/cm³ aufweisen, bevorzugt mindestens 10 Poren/cm³, besonders bevorzugt mindestens 20 Poren/cm³.

Eine erfindungsgemäße stromleitende Struktur weist eine erste Gruppe von Poren mit einer Größe von etwa 10 µm bis etwa 500 µm auf, bevorzugt mit einer Größe von etwa 50 µm bis etwa 300 µm, besonders bevorzugt eine Größe von etwa 100 µm bis etwa 200 µm.

Ferner kann eine erfindungsgemäße Struktur zusätzlich zu der ersten Gruppe von Poren oder anstelle der ersten Gruppe von Poren eine weitere Gruppe von Poren mit einer Größe von mindestens 1 mm aufweisen.

Die erste Gruppe von Poren kann die mechanische Stabilität erhöhen oder zumindest nicht verschlechtern, und ist ein Kompromiss zwischen guten elektrischen Eigenschaften, insbesondere der elektrischen Leitfähigkeit, und der mechanischen Eigenschaften.

Die weitere Gruppe von Poren ist vorteilhafterweise einfacher zu fertigen; auch ist sie einfacher und besser anzuordnen und zu orientieren.

Im Folgenden werden drei beispielhafte, in den Zeichnungen schematisch dargestellte Ausführungsformen, beschrieben, in denen die unterschiedlichen Verteilungen und Orientierungen der Poren besser verdeutlicht werden.

In FIG. 1 ist eine exemplarische Ausführungsform einer nicht erfindungsgemäßen stromleitenden Struktur 100 mit einer Vielzahl von geschlossen ausgeführten Poren 10 dargestellt, die sich in einem Bereich der stromleitenden Struktur 100 befinden, welcher aus einem Metall oder einer metallähnlichen Substanz gebildet ist. Ferner ist in FIG. 1 eine exemplarische Stromleitungsrichtung S angeben. Es ist ersichtlich, dass die geschlossen ausgeführten Poren 10 homogen in dem Bereich der stromleitenden Struktur 100 verteilt sind, und dass die Poren 10 ferner isotrop orientiert sind. Das heißt, dass die Poren 10 gleichmäßig in der stromleitenden Struktur 100 verteilt angeordnet sind und im Wesentlichen nicht in eine Richtung, insbesondere nicht in Stromleitungsrichtung S, ausgerichtet sind.

Dies führt zu einer Gewichtsreduktion der stromleitenden Struktur 100. Allerdings können die elektrischen Eigenschaften, insbesondere die elektrische Leitfähigkeit, dabei verschlechtert werden. Dies kann unter anderem dadurch verursacht werden, dass zumindest ein Teil der Poren 10 - genauer gesagt zumindest ein Teil der im Wesentlichen nicht-runden Poren 10, d.h. der Poren 10, die eine Längsrichtung oder Vorzugsrichtung aufweisen - so angeordnet ist, dass deren Vorzugsrichtung quer zur Stromleitungsrichtung S verläuft.

FIG. 2 zeigt eine nicht erfindungsgemäße Ausführungsform, bei der die Vielzahl von Poren 10 inhomogen in dem Bereich der stromleitenden Struktur 100 angeordnet ist, der aus Metall oder einer metallähnlichen Substanz ausgebildet ist. Das heißt, dass die Poren 10 ungleichmäßig in der stromleitenden Struktur 100 verteilt angeordnet sind, insbesondere sind die Poren 10 - bevorzugt entlang einer Stromleitungsrichtung S - in einem inneren, zentral gelegenen Bereich der stromleitenden Struktur 100 angeordnet. Eine solche Stromleitungsrichtung S ist in FIG. 2 exemplarisch mithilfe eines Pfeils angedeutet.

Bevorzugt sind die Poren 10 nicht in der Nähe der Oberflächen der stromleitenden Struktur 100 angeordnet, besonders bevorzugt sind ebenfalls keine Poren 10 an Winkelbereichen und/oder an Bereichen, an denen eine Schweißverbindung vorgesehen ist, angeordnet. Die Orientierung der Poren 10 in dieser Ausführungsform ist im Wesentlichen isotrop, d.h. dass keine Ausrichtung der Poren 10 in eine Richtung, insbesondere in Stromleitungsrichtung S, vorgesehen ist.

Eine derartige Verteilung der Poren 10 führt zu einer Verbesserung der elektrischen und/oder mechanischen Eigenschaften, insbesondere der elektrischen Leitfähigkeit, und zu einer Gewichtsreduktion der stromleitenden Struktur 100.

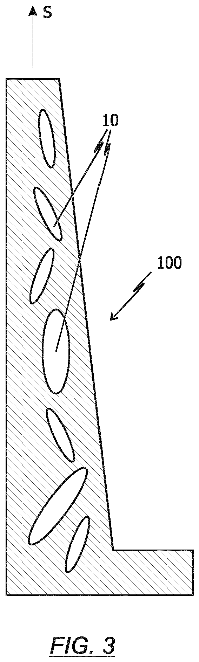

FIG. 3 zeigt eine erfindungsgemäße Ausführungsform, bei der die Poren 10 inhomogen in der stromleitenden Struktur 100 angeordnet sind, d.h. ungleichmäßig in der stromleitenden Struktur 100 angeordnet sind, und gleichzeitig eine anisotrope Orientierung, insbesondere in Stromleitungsrichtung S, welche exemplarisch durch einen Pfeil angedeutet ist, aufweisen, und zwar derart, dass mindestens ein Teil der Poren 10, vorzugsweise alle Poren 10, einen im Wesentlichen nicht-runden Querschnitt - d.h. Poren 10 mit einer Längsrichtung oder Vorzugsrichtung -, insbesondere mit einem ovalen Querschnitt, aufweist bzw. aufweisen. Die Längsachse oder Vorzugsachse der im Querschnitt im Wesentlichen nicht-runden Poren 10 ist dabei in Stromleitungsrichtung S orientiert. Eine solche Orientierung der Poren 10 verbessert vor allem die elektrischen Eigenschaften der stromleitenden Struktur 100, insbesondere die elektrische Leitfähigkeit der Struktur 100.

Auch wenn es nicht explizit in den Zeichnungen gezeigt ist, ist es auch denkbar, dass die Poren 10 homogen in der stromleitenden Struktur 100 verteilt, d.h. gleichmäßig verteilt, angeordnet sind, und zumindest ein Teil der Poren 10, vorzugsweise alle Poren 10, eine anisotrope Orientierung, insbesondere in Stromleitungsrichtung S, aufweist bzw. aufweisen, und zwar derart, dass mindestens der Teil der Poren 10, vorzugsweise alle Poren 10, einen im Wesentlichen nicht-runden Querschnitt, d.h. Poren 10 mit einer Längsrichtung oder Vorzugsrichtung, insbesondere mit einem ovalen Querschnitt, aufweist bzw. aufweisen, deren Längsachse oder Vorzugsachse bevorzugt in Stromleitungsrichtung S orientiert ist. Dadurch werden ebenfalls die elektrischen Eigenschaften, insbesondere die elektrische Leitfähigkeit und/oder die mechanischen Eigenschaften verbessert.

In einer weiteren Ausführungsform der Erfindung, welche nicht in den Zeichnungen abgebildet ist, ist ein System vorgesehen, welches jeweils mindestens eines der folgenden Elemente aufweist: einen Akkumulator, insbesondere einen Bleiackumulator, ein elektrisches Abnehmerelement, welches mit mindestens einem Pol des Akkumulators elektrisch verbunden ist, und eine oben beschriebene Struktur 100. Die Struktur 100 ist hierbei Teil des Akkumulators und/oder des elektrischen Abnehmerelements.

Die Verwendung einer oben beschriebenen stromleitenden Struktur 100 als Teil eines Akkumulators und/oder eines elektrischen Abnehmerelements führt zu einer Gewichtsreduktion des Systems und gleichzeitig zur Verbesserung der elektrischen und/oder mechanischen Eigenschaften des Systems, insbesondere der elektrischen Leitfähigkeit.

Das System kann sich alternativ auch auf ein Generatorsystem beziehen bei welchem anstelle der elektrischen Abnehmerelemente mindestens ein elektrisches Zuführelement ausgebildet ist, und das System zusätzlich einen elektrischen Generator aufweist. Die stromleitende Struktur 100 kann dabei Teil des Akkumulators und/oder des elektrischen Zuführelements und/oder des Generators sein.

Eine stromleitende Struktur 100, insbesondere eine der oben beschriebenen stromleitenden Strukturen 100, kann folgendermaßen hergestellt werden.

Zunächst wird eine Polymer-Struktur bereitgestellt, welche in eine Gießform eingebracht wird. Anschließend wird die Gießform mit einer Schmelze aus Metall oder einer Schmelze aus einer metallähnlichen Substanz gefüllt. Dabei wird die Polymer-Struktur derart vergast, dass geschlossene Poren 10 in der gegossenen Struktur 100 gebildet werden. Hierbei wird ein einfaches und effizientes Verfahren zum Herstellen einer stromleitenden Struktur 100 beschrieben. Dieses ist zudem kostengünstig auszuführen und führt zu einer stromleitenden Struktur 100 mit verringertem Gewicht.

Die Polymer-Struktur kann ferner aus einem Polymerschaum gebildet sein, was dazu führt, dass für die Polymer-Struktur weniger Material benötigt wird. Dies führt auch zu einer Kostenreduzierung. Bevorzugt können leere, d. h. mit Vakuum gefüllte, Poren 10 und/oder mit reinem Gas gefüllte Poren 10 mit einer Polymer-Struktur aus Polymerschaum hergestellt werden.

Um mit elektrisch leitfähigem Material gefüllte Poren 10 auszubilden, kann die Polymer-Struktur eine Vielzahl von Partikeln aus dem elektrisch leitfähigen Material, insbesondere Metall, aufweisen. Das Metall ist vorzugsweise Silber, Kupfer, Gold, Wolfram und/oder Aluminium. Es ist auch denkbar, Kohlenstoff oder eine Kohlenstoff-enthaltende Substanz als Füllungsmaterial zu verwenden. Dazu kann die Polymer-Struktur eine Vielzahl von Kohlenstoffpartikeln oder von Partikeln der Kohlenstoff-enthaltenden Substanz, insbesondere in Form von Kohlenstofffasern oder Teilen davon, aufweisen.

Dadurch können vorteilhafterweise die Poren 10 schon bei der Entstehung mit elektrisch leitfähigem Material gefüllt werden. Dadurch erhöht sich die elektrische Leitfähigkeit der stromleitenden Struktur 100, wobei der einfache Verfahrensablauf erhalten bleibt.

Vorzugsweise kann es sich bei dem Verfahren um ein Niederdruck-Vollform-gießverfahren handeln. Damit kann die stromleitende Struktur 100 kostengünstig und einfach, aber präzise hergestellt werden.

Die Polymer-Struktur gibt dabei die Position und Orientierung der späteren Poren 10 von Anfang an vor.

Die mit elektrisch leitfähigem Material gefüllten Poren 10, welche vorzugsweise einen im Wesentlichen nicht-runden Querschnitt aufweisen, können dadurch bereits in Position gebracht werden und in Richtung der Stromleitungsrichtung S ausgerichtet werden. So kann der fertige Gusskörper die gut leitenden Einschlüsse, d. h. die mit leitfähigem Material gefüllten Poren 10, und gegebenenfalls wenige leere Poren 10 enthalten.

## Patentansprüche

1. Stromleitende Struktur (100) zum Einsatz in einem Energiespeichersystem eines Fahrzeugs, wobei die stromleitende Struktur (100) zumindest bereichsweise aus einem Metall gegossen ist, in welchem eine Vielzahl von geschlossen ausgeführten Poren (10) ausgebildet sind,
wobei die stromleitende Struktur (100) zumindest bereichsweise eine Porendichte von mindestens 5 Poren/cm² aufweist, wobei zumindest eine erste Gruppe von Poren Poren (10) mit einer Größe von 10 µm bis 500 µm aufweist, wobei die Poren (10) inhomogen in der stromleitenden Struktur (100) verteilt sind, und zwar derart, dass die Poren (10) nur in einem inneren zentral gelegenen Bereich der stromleitenden Struktur (100) angeordnet sind, wobei die stromleitende Struktur (100) zumindest in dem Bereich der Poren eine Dicke von mindestens 5 mm aufweist, und wobei die Poren (10) zumindest teilweise eine anisotrope Orientierung aufweisen, und zwar derart, dass mindestens ein Teil der Poren (10) einen nicht-runden Querschnitt aufweist, dessen Längsachse in Stromleitungsrichtung (S) orientiert ist,
wobei die Struktur (100) als Stromschiene und/oder Brückenverbinder des Energiespeichersystems, bevorzugt einer Starterbatterie eines Fahrzeugs, ausgebildet ist.

2. Struktur (100) nach Anspruch 1,
wobei die Poren (10) zumindest teilweise einen runden Querschnitt aufweisen.

3. Struktur (100) nach Anspruch 1 oder 2,
wobei die Poren (10), die zumindest teilweise einen im Wesentlichen nicht-runden Querschnitt aufweisen, einen im Wesentlichen ovalen Querschnitt aufweisen.

4. Struktur (100) nach einem der Ansprüche 1 bis 3,
wobei die Struktur (100) zumindest in dem Bereich der Poren eine Dicke von mindestens 10 mm aufweist.

5. Struktur (100) nach einem der Ansprüche 1 bis 4,
wobei die Poren (10), die die anisotrope Orientierung aufweisen, einen ovalen Querschnitt, aufweisen, dessen Längsachse in Stromleitungsrichtung (S) orientiert ist.

6. Struktur (100) nach einem der Ansprüche 1 bis 5,
wobei zumindest ein Teil der Poren (10) mit einem Gas und/oder einem Polymer gefüllt ist.

7. Struktur (100) nach einem der Ansprüche 1 bis 6,
wobei zumindest ein Teil der Poren (10) mit einem elektrisch leitenden Material gefüllt ist,
wobei das elektrisch leitende Material insbesondere Metall, vorzugsweise Silber, Kupfer, Gold, Wolfram und/oder Aluminium, und/oder Kohlenstoff oder eine Kohlenstoff-enthaltende Substanz, vorzugsweise Kohlenstofffasern oder eine Kohlenstofffasern-enthaltende Substanz, aufweist.

8. Struktur (100) nach einem der Ansprüche 1 bis 7,
wobei die erste Gruppe von Poren Poren mit einer Größe von 50 µm bis 300 µm aufweist, bevorzugt eine Größe von 100 µm bis 200 µm.

9. Struktur nach einem der Ansprüche 1 bis 8,
wobei die Struktur (100) eine weitere Gruppe von Poren mit einer Größe von mindestens 1 mm aufweist.

10. Struktur (100) nach einem der Ansprüche 1 bis 9,
wobei die Porendichte zumindest bereichsweise mindestens 10 Poren/cm² beträgt, besonders bevorzugt mindestens 20 Poren/cm², und/oder wobei die Struktur (100) zumindest bereichsweise in dem Bereich der Poren (10) aus Blei und/oder einer Bleilegierung gefertigt ist.

11. System, welches Folgendes aufweist:
- mindestens einen Akkumulator, insbesondere einen Bleiakkumulator;
- mindestens ein elektrisches Abnehmerelement, welches mit mindestens einem Pol des Akkumulators elektrisch verbunden ist; und
- mindestens eine Struktur (100) nach einem der Ansprüche 1 bis 10,
wobei die Struktur (100) Teil des Akkumulators und/oder des elektrischen Abnehmerelements ist.

12. Verfahren zum Herstellen von einer stromleitenden Struktur, insbesondere einer Struktur (100) nach einem der Ansprüche 1 bis 10, wobei das Verfahren folgende Schritte aufweist:
- Bereitstellen einer Polymer-Struktur;
- Einbringen der Polymer-Struktur in eine Gießform; und
- Füllen der Gießform mit einer Schmelze aus Metall,
wobei die Polymer-Struktur so vergast, dass geschlossene Poren (10) in der gegossenen Struktur (100) gebildet werden.

13. Verfahren nach Anspruch 12,
wobei die Polymer-Struktur eine Vielzahl von Partikeln aus elektrisch leitfähigem Material aufweist, insbesondere Metall, vorzugsweise Silber, Kupfer, Gold, Wolfram und/oder Aluminium, und/oder Kohlenstoff oder eine Kohlenstoff-enthaltende Substanz, vorzugsweise Kohlenstofffasern oder eine Kohlenstofffasern-enthaltende Substanz, und
wobei die Polymer-Struktur mit den Partikeln dazu ausgelegt ist, in der gegossenen Struktur (100) Poren (10) auszubilden, die mit dem elektrisch leitfähigen Material gefüllt sind.

14. Verfahren nach Anspruch 12 oder 13,
wobei die Polymer-Struktur aus einem Polymerschaum gebildet ist.

15. Verfahren nach einem der Ansprüche 12 bis 14,
wobei es sich bei dem Verfahren um ein Niederdruck-Vollformgießverfahren handelt.

## Claims

1. Current-conducting structure (100) for use in an energy storage system of a vehicle, wherein the current-conducting structure (100) is at least in some regions cast from a metal in which a multiplicity of closed pores (10) are formed,
wherein the current-conducting structure (100) has at least in some regions a pore density of at least 5 pores/cm², wherein at least a first group of pores comprises pores (10) with a size of 10 µm to 500 µm, wherein the pores (10) are distributed inhomogeneously in the current-conducting structure (100), to be precise in such a way that the pores (10) are only arranged in an inner, centrally located region of the current-conducting structure (100), wherein the current-conducting structure (100) has at least in the region of the pores a thickness of at least 5 mm, and wherein the pores (10) have at least partially an anisotropic orientation, to be precise in such a way that at least some of the pores (10) have a nonround cross section, the longitudinal axis of which is oriented in the current-conducting direction (S),
wherein the structure (100) is formed as a conductor rail and/or a bridge connector of the energy storage system, preferably a starter battery of a vehicle.

2. Structure (100) according to Claim 1,
wherein the pores (10) have at least partially a round cross section.

3. Structure (100) according to Claim 1 or 2,
wherein the pores (10) which have at least partially a substantially nonround cross section have a substantially oval cross section.

4. Structure (100) according to one of Claims 1 to 3,
wherein the structure (100) has at least in the region of the pores a thickness of at least 10 mm.

5. Structure (100) according to one of Claims 1 to 4,
wherein the pores (10) which have an anisotropic orientation have an oval cross section, the longitudinal axis of which is oriented in the current-conducting direction (S).

6. Structure (100) according to one of Claims 1 to 5,
wherein at least some of the pores (10) are filled with a gas and/or a polymer.

7. Structure (100) according to one of Claims 1 to 6,
wherein at least some of the pores (10) are filled with an electrically conducting material,
wherein the electrically conducting material comprises in particular metal, preferably silver, copper, gold, tungsten and/or aluminium, and/or carbon or a carbon-containing substance, preferably carbon fibres or a carbon-fibre-containing substance.

8. Structure (100) according to one of Claims 1 to 7,
wherein the first group of pores comprises pores with a size of 50 µm to 300 µm, preferably a size of 100 µm to 200 µm.

9. Structure according to one of Claims 1 to 8,
wherein the structure (100) comprises a further group of pores with a size of at least 1 mm.

10. Structure (100) according to one of Claims 1 to 9,
wherein the pore density at least in some regions is at least 10 pores/cm², particularly preferably at least 20 pores/cm², and/or
wherein the structure (100) is produced at least in some regions from lead and/or a lead alloy in the region of the pores (10).

11. System, which comprises the following:
- at least one storage battery, in particular a lead storage battery;
- at least one electrical collector element, which is electrically connected to at least one pole of the storage battery; and
- at least one structure (100) according to one of Claims 1 to 10,
wherein the structure (100) is part of the storage battery and/or of the electrical collector element.

12. Method for producing a current-conducting structure, in particular a structure (100) according to one of Claims 1 to 10, wherein the method comprises the following steps:
- providing a polymer structure;
- introducing the polymer structure into a casting mould; and
- filling the casting mould with a molten metal,
wherein the polymer structure is gasified in such a way that closed pores (10) are formed in the cast structure (100).

13. Method according to Claim 12,
wherein the polymer structure comprises a multiplicity of particles of electrically conductive material, in particular metal, preferably silver, copper, gold, tungsten and/or aluminium, and/or carbon or a carbon-containing substance, preferably carbon fibres or a carbon-fibre-containing substance, and
wherein the polymer structure with the particles is designed so as to form pores (10) in the cast structure (100) that are filled with the electrically conductive material.

14. Method according to Claim 12 or 13,
wherein the polymer structure is formed from a polymer foam.

15. Method according to one of Claims 12 to 14,
wherein the method is a low-pressure full-mould casting process.

## Revendications

1. Structure conductrice de courant (100) destinée à être utilisée dans un système d'accumulation d'énergie d'un véhicule, la structure conductrice de courant (100) étant au moins partiellement coulée en métal, dans lequel sont formés une multitude de pores fermés (10),
la structure conductrice de courant (100) présentant au moins partiellement une densité de pores d'au moins 5 pores/cm², au moins un premier groupe de pores présentant des pores (10) d'une dimension de 10 µm à 500 µm, les pores (10) étant répartis de manière inhomogène dans la structure conductrice de courant (100) et ce de manière telle que les pores (10) ne sont agencés que dans une zone interne centrale de la structure conductrice de courant (100), la structure conductrice de courant (100) présentant, au moins dans la zone des pores, une épaisseur d'au moins 5 mm et les pores (10) présentant, au moins en partie, une orientation anisotrope et ce de manière telle qu'au moins une partie des pores (10) présente une section qui n'est pas ronde, dont l'axe longitudinal est orienté dans la direction de la conduction de courant (S),
la structure (100) étant conçue comme une barre conductrice et/ou un connecteur à pont du système d'accumulation d'énergie, de préférence d'une batterie de démarrage d'un véhicule.

2. Structure (100) selon la revendication 1,
les pores (10) présentant au moins en partie une section ronde.

3. Structure (100) selon la revendication 1 ou 2,
les pores (10), qui présentent au moins en partie une section qui n'est sensiblement pas ronde, présentant une section sensiblement ovale.

4. Structure (100) selon l'une des revendications 1 à 3,
la structure (100) présentant, au moins dans la zone des pores, une épaisseur d'au moins 10 mm.

5. Structure (100) selon l'une des revendications 1 à 4,
les pores (10), qui présentent l'orientation anisotrope présentant une section ovale dont l'axe longitudinal est orienté dans la direction de la conduction du courant (S).

6. Structure (100) selon l'une des revendications 1 à 5,
au moins une partie des pores (10) étant remplie d'un gaz et/ou d'un polymère.

7. Structure (100) selon l'une des revendications 1 à 6,
au moins une partie des pores (10) étant remplie d'un matériau électriquement conducteur,
le matériau électriquement conducteur présentant en particulier un métal, de préférence l'argent, le cuivre, l'or, le tungstène et/ou l'aluminium et/ou du carbone ou une substance contenant du carbone, de préférence des fibres de carbone ou une substance contenant des fibres de carbone.

8. Structure (100) selon l'une des revendications 1 à 7,
le premier groupe de pores présentant des pores d'une dimension de 50 µm à 300 µm , de préférence une dimension de 100 µm à 200 µm.

9. Structure (100) selon l'une des revendications 1 à 8,
la structure (100) présentant un autre groupe de pores d'une dimension d'au moins 1 mm.

10. Structure (100) selon l'une des revendications 1 à 9,
la densité de pores étant au moins partiellement d'au moins 10 pores/cm², de manière particulièrement préférée d'au moins 20 pores/cm² et la structure (100) étant fabriquée au moins partiellement dans la zone des pores (10) en plomb et/ou en un alliage de plomb.

11. Système présentant les éléments suivants :
- au moins un accumulateur, en particulier un accumulateur à plomb ;
- au moins un élément consommateur électrique qui est relié électriquement à au moins un pôle de l'accumulateur ; et
- au moins structure (100) selon l'une des revendications 1 à 10,
la structure (100) faisant partie de l'accumulateur et/ou de l'élément consommateur électrique.

12. Procédé pour la fabrication d'une structure conductrice de courant, en particulier d'une structure (100) selon l'une des revendications 1 à 10, le procédé présentant les étapes suivantes :
- mise à disposition d'une structure polymère ;
- introduction de la structure polymère dans un moule de coulée ; et
- remplissage du moule de coulée par une masse fondue de métal,
la structure polymère étant gazéifiée de manière telle que des pores fermés (10) sont formés dans la structure coulée (100).

13. Procédé selon la revendication 12,
la structure polymère présentant une multitude de particules en matériau électriquement conducteur, en particulier un métal, de préférence l'argent, le cuivre, l'or, le tungstène et/ou l'aluminium et/ou du carbone ou une substance contenant du carbone, de préférence des fibres de carbone ou une substance contenant des fibres de carbone et
la structure polymère avec les particules étant conçue pour former, dans la structure coulée (100), des pores (10) qui sont remplis du matériau électriquement conducteur.

14. Procédé selon la revendication 12 ou 13,
la structure polymère étant formée en une mousse polymère.

15. Procédé selon l'une des revendications 12 à 14,
le procédé étant un procédé de coulée en moules pleins à basse pression.
